(19) Europäisches Patentamt
European Patent Office
Office européen des brevets

(11) **EP 3 922 606 A1**

(12) **EUROPEAN PATENT APPLICATION**
published in accordance with Art. 153(4) EPC

(43) Date of publication:
**15.12.2021 Bulletin 2021/50**

(51) Int Cl.:
**C01G 51/00** *(2006.01)*    **C01G 49/00** *(2006.01)*
**H01F 1/11** *(2006.01)*

(21) Application number: **20753178.1**

(22) Date of filing: **04.02.2020**

(86) International application number:
**PCT/JP2020/004083**

(87) International publication number:
**WO 2020/162443 (13.08.2020 Gazette 2020/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2019 JP 2019018904**

(71) Applicants:
• **The University of Tokyo**
  **Bunkyo-ku,**
  **Tokyo 113-8654 (JP)**
• **DOWA Electronics Materials Co., Ltd.**
  **Tokyo 101-0021 (JP)**

(72) Inventors:
• **OHKOSHI, Shin-ichi**
  **Tokyo 113-8654 (JP)**
• **NAMAI, Asuka**
  **Tokyo 113-8654 (JP)**
• **YOSHIKIYO, Marie**
  **Tokyo 113-8654 (JP)**
• **KODAMA, Daisuke**
  **Tokyo 101-0021 (JP)**
• **OBATA, Shiho**
  **Sendai-shi, Miyagi 980-0871 (JP)**
• **GOTOH, Masahiro**
  **Tokyo 101-0021 (JP)**

(74) Representative: **Emde, Eric**
  **Wagner & Geyer Partnerschaft mbB**
  **Patent- und Rechtsanwälte**
  **Gewürzmühlstrasse 5**
  **80538 München (DE)**

(54) **IRON-BASED OXIDE MAGNETIC POWDER AND PRODUCTION METHOD THEREFOR**

(57)    [Object] To provide an iron-based oxide magnetic powder that has good thermal stability and a small change in coercive force even in a high-temperature environment and that is composed of particles of $\varepsilon$-iron oxide in which Fe sites are partially substituted by another metal element, and a production method for an iron-based oxide magnetic powder.

[Means for Solution] An iron-based oxide magnetic powder that has good thermal stability and a small change in coercive force even in a high-temperature environment and that is composed of particles of $\varepsilon$-iron oxide in which Fe sites are partially substituted by another metal element is obtained by allowing a phosphorus-containing ion to coexist when a precipitate of an iron hydroxide containing a substituent metal element produced by neutralizing an acidic aqueous solution containing a trivalent iron ion and an ion of a metal that partially substitutes Fe sites is coated with silicon oxide using a silane compound.

[Fig.1]

EP 3 922 606 A1

**Description**

Technical Field

The present invention relates to an iron-based oxide magnetic powder suitable for a high-density magnetic recording medium, a radio wave absorber, etc., and particularly to a magnetic powder having excellent thermal stability and a production method therefor.

Background Art

While $\varepsilon$-Fe$_2$O$_3$ is an extremely rare phase among iron oxides, particles thereof having a nanometer order size show a great coercive force (Hc) of about 20 kOe ($1.59 \times 10^6$ A/m) at room temperature, and therefore, a production method for synthesizing $\varepsilon$-Fe$_2$O$_3$ as a single phase has been conventionally studied (PTL 1, NPLs 1 and 2). Further, when $\varepsilon$-Fe$_2$O$_3$ is used in a magnetic recording medium, there is currently no material for a magnetic head having a high-level saturation magnetic flux density corresponding thereto, and therefore, the adjustment of the coercive force is also performed by partially substituting the Fe sites of $\varepsilon$-Fe$_2$O$_3$ by a trivalent metal such as Al, Ga, or In, and the relationship between the coercive force and the radio wave absorption characteristics has also been examined (PTL 2, NPLs 3 to 6).
On the other hand, in the field of magnetic recording, development of a magnetic recording medium having a high ratio of reproduced signal level to particulate noise (C/N ratio: carrier to noise ratio) has been conducted, and in order to increase the recording density, there has been a demand for micronization of magnetic particles constituting a magnetic recording layer. However, the micronization of the magnetic particles is generally likely to cause deterioration of the environmental stability and thermal stability thereof, which raises concerns about the deterioration of the magnetic characteristics of the magnetic particles under the use or storage environment. In PTL 3, magnetic iron oxide particles that have $\varepsilon$-Fe$_2$O$_3$ as a main phase and are represented by a general formula $\varepsilon$-A$_x$B$_y$Fe$_{2-x-y}$O$_3$ or $\varepsilon$-A$_x$B$_y$C$_z$Fe$_{2-x-y-z}$O$_3$ (wherein A, B, and C are mutually different metals excluding Fe and satisfy 0 < x, y, z < 1) are disclosed as a magnetic material that has a high Hc and a high Curie point and does not require a rare or expensive raw material while being able to control the magnetic characteristics thereof. Note that in the present description, hereinafter, an iron-based oxide magnetic powder, which has the same crystal structure as that of $\varepsilon$-Fe$_2$O$_3$, and in which the Fe sites thereof are partially substituted by another metal element, is referred to as "$\varepsilon$-type iron-based oxide magnetic powder".

Citation List

Patent Literature

PTL 1: JP-A-2008-174405
PTL 2: WO 2008/029861
PTL 3: WO 2008/149785
NPL 1: J. Jin, S. Ohkoshi, K. Hashimoto, Adv. Mater., 16, 48-51 (2004)
NPL 2: S. Ohkoshi, A. Namai, K. Imoto, M. Yoshikiyo, W. Tarora, K. Nakagawa, M. Komine, Y. Miyamoto, T. Nasu, S. Oka and H. Tokoro, Scientific Reports, 5, 14414 (2015)
NPL 3: S. Ohkoshi, S. Kuroki, S. Sakurai, K. Matsumoto, K. Sato, and S. Sasaki, Angew. Chem. Int. Ed., 46, 8392-8395 (2007)
NPL 4: A. Namai, S. Sakurai, M. Nakajima, T. Suemoto, K. Matsumoto, M. Goto, S. Sasaki, and S. Ohkoshi, J. Am. Chem. Soc., 131, 1170-1173 (2009)
NPL 5: A. Namai, M. Yoshikiyo, K. Yamada, S. Sakurai, T. Goto, T. Yoshida, T. Miyazaki, M. Nakajima, T. Suemoto, H. Tokoro, and S. Ohkoshi, Nature Communications, 3, 1035/1-6 (2012)
NPL 6: S. Ohkoshi, A. Namai, M. Yoshikiyo, K. Imoto, K. Tamasaki, K. Matsuno, O. Inoue, T. Ide, K. Masada, M. Goto, T. Goto, T. Yoshida and T. Miyazaki, Angew. Chem. Int. Ed., 55, 11403-11406 (2016)

Summary of Invention

Technical Problem

The $\varepsilon$-type iron-based oxide magnetic powder disclosed in PTL 3 is described to have a high Curie point, however, the coercive force changes in a high-temperature environment of, for example, 60°C or higher, which sometimes poses a problem when it is used as a magnetic material in a high-temperature environment. That is, when the $\varepsilon$-type

iron-based oxide magnetic powder is used as a radio wave absorbing material, if the coercive force changes in a high-temperature environment, there occurs a problem that the amount of radio wave absorption also changes accompanying this.

A production method for an ε-type iron-based oxide magnetic powder disclosed in PTL 3 is configured such that a precursor of an iron-based oxide magnetic powder, which is obtained using a reverse micelle method or an aqueous reaction solution, and in which Fe sites are substituted by mutually different two or three types of metal ions is coated with a silane derivative using a sol-gel method, followed by firing, thereby obtaining an ε-type iron-based oxide magnetic powder. However, the thermal stability of the ε-type iron-based oxide magnetic powder obtained by the conventional method is not always satisfactory as described above, and therefore, there has been a demand for an ε-type iron-based oxide magnetic powder having a small change in coercive force under normal temperature to high-temperature environment of about 90°C.

As a result of various studies, the present inventors found that an ε-type iron-based oxide magnetic powder having good thermal stability and a small change in coercive force even in a high-temperature environment is obtained by allowing a phosphorus-containing ion to coexist in a reaction solution when a precipitate of an iron hydroxide containing a hydroxide of a substituent metal for Fe sites that is a precursor of an ε-type iron-based oxide magnetic powder is coated with a hydrolysate of a silane compound by a sol-gel method, and thus completed the present invention described below.

In order to solve the above problems, in the present invention,
an iron-based oxide magnetic powder composed of particles of ε-iron oxide in which Fe sites are partially substituted by another metal element, wherein when coercive forces Hc as measured at a maximum applied magnetic field of 1193 kA/m and a measurement temperature of 25°C, 60°C, and 90°C are represented by $Hc_{25}$, $Hc_{60}$, and $Hc_{90}$, respectively, the absolute values of $\Delta Hc_{60}$ and $\Delta Hc_{90}$ defined by the following formula (1) and formula (2) are both 0.15 or less is provided.

$$\Delta Hc_{60} = (Hc_{60} - Hc_{25}) / Hc_{25} \qquad (1)$$

$$\Delta Hc_{90} = (Hc_{90} - Hc_{25}) / Hc_{25} \qquad (2)$$

It is preferred that the another metal element that partially substitutes the Fe sites is Ti, Co, and "one type selected from Ga and Al".

Further, in the present invention, a production method for an iron-based oxide magnetic powder composed of particles of ε-iron oxide in which Fe sites are partially substituted by another metal element, including a neutralization step of neutralizing an acidic aqueous solution containing a trivalent iron ion, an ion of a metal that partially substitutes the Fe sites, and a phosphorus-containing ion in which the molar ratio (P/Si) of the amount of phosphorus contained in the phosphorus-containing ion to the amount of Si of a silane compound to be added in the following coating step is 0.0001 or more and 0.01 or less with an alkali aqueous solution, thereby obtaining a slurry of a precipitate of an iron hydroxide containing a substituent metal element, a coating step of adding a silane compound to the slurry containing the precipitate of the iron hydroxide containing the substituent metal element, thereby coating the precipitate of the iron hydroxide containing the substituent metal element with a hydrolysate of the silane compound in the presence of the phosphorus-containing ion, a recovery step of recovering the precipitate of the iron hydroxide containing the substituent metal element coated with the hydrolysate of the silane compound by solid-liquid separation, a heating step of heating the recovered precipitate of the iron hydroxide containing the substituent metal element coated with the hydrolysate of the silane compound, thereby obtaining an iron oxide powder containing the substituent metal element coated with silicon oxide, and a dissolution step of dissolving the silicon oxide coating by immersing the iron oxide powder containing the substituent metal element coated with silicon oxide obtained by the heating step in an alkali aqueous solution, thereby obtaining the iron oxide powder containing the substituent metal element is provided.

Further, in the present invention, a production method for an iron-based oxide magnetic powder composed of particles of ε-iron oxide in which Fe sites are partially substituted by another metal element, including a neutralization step of neutralizing an acidic aqueous solution containing a trivalent iron ion and an ion of a metal that partially substitutes the Fe sites with an alkali aqueous solution, thereby obtaining a slurry of a precipitate of an iron hydroxide containing a substituent metal element, a coating step of adding a silane compound in which the molar ratio (Si/(Fe+M)) of the amount of Si of a silane compound to the sum (Fe+M) of the amount of the iron ion and the amount of the substituent metal ion contained in a raw material solution is 0.50 or more and 10 or less, and a phosphorus-containing ion in which the molar ratio (P/Si) of the amount of phosphorus contained in the phosphorus-containing ion to the amount of Si of the silane compound is 0.0001 or more and 0.01 or less to the slurry containing the precipitate of the iron hydroxide containing the substituent metal element, thereby coating the precipitate of the iron hydroxide containing the substituent metal element with a hydrolysate of the silane compound in the presence of the phosphorus-containing ion, a recovery step of recovering the precipitate of the iron hydroxide containing the substituent metal element coated with the hydrolysate of the silane compound by solid-liquid separation, an oxidation step of heating the recovered precipitate of the iron hydroxide containing the substituent metal element coated with the hydrolysate of the silane compound, thereby obtaining an iron oxide powder containing the substituent metal element coated with silicon oxide, and a dissolution step of dissolving the silicon oxide coating by immersing the iron oxide powder containing the substituent metal element coated with silicon oxide obtained by the oxidation step in an alkali aqueous solution, thereby obtaining the iron oxide powder containing the substituent metal element is provided.

In these production methods, it is preferred that the another metal element that partially substitutes the Fe sites is Ti, Co, and "one type selected from Ga and Al". Further, it is preferred that the phosphorus-containing ion is one or more types selected from a phosphate ion, a phosphite ion, and a hypophosphite ion.

Advantageous Effects of Invention

By using the production method of the present invention, an $\varepsilon$-type iron-based oxide magnetic powder having good thermal stability and a small change in coercive force even in a high-temperature environment can be obtained.

Brief Description of Drawings

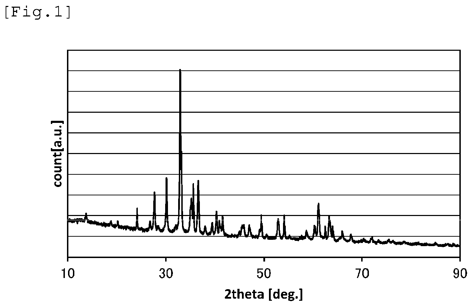

[Fig. 1] Fig. 1 shows the results of XRD measurement of an iron-based oxide magnetic powder obtained in Example 1.

Description of Embodiments

[Iron-Based Oxide Magnetic Powder]

The production method of the present invention is a method for producing an $\varepsilon$-type iron-based oxide magnetic powder having excellent thermal stability, and examples of the $\varepsilon$-type iron-based oxide to be obtained include the following.

One represented by a general formula: $\varepsilon$-$C_z Fe_{2-z} O_3$ (wherein C is Ga or Al)
One represented by a general formula: $\varepsilon$-$A_x B_y Fe_{2-x-y} O_3$ (wherein A is Co and B is Ti)
One represented by a general formula: $\varepsilon$-$A_x B_y C_z Fe_{2-x-y-z} O_3$ (wherein A is Co, B is Ti, and C is Ga or Al)

The element that substitutes the Fe site preferably contains Ti or Co having an effect of improving the heat resistance of the iron-based oxide magnetic powder. From the viewpoint of keeping the thermal stability and the coercive force of magnetic particles at normal temperature high, it is more preferred that the Fe sites are simultaneously substituted by two elements: Ti and Co. The three-element substituted-type has an advantage that it is easy to obtain the same space group as that of $\varepsilon$-$Fe_2 O_3$ in addition to control of thermal stability and coercive force, and therefore, the element that substitutes the Fe site is more preferably Ti, Co, and one type selected from Ga and Al.

Preferred ranges of the substitution amounts x, y, and z of a three-element substituted material are as follows. x and y can take an arbitrary range of $0<x<1$ and $0<y<1$. However, in order to obtain $\varepsilon$-iron oxide having excellent thermal stability, it is necessary to control the composition, and therefore, it is preferred to set x and y within the following ranges: $0.01 \leq x \leq 0.5$ and $0.01 \leq y \leq 0.5$. From the viewpoint of ease of control of coercive force and acquisition of a single phase, it is more preferred to set x and y within the following ranges: $0.01 \leq x \leq 0.2$ and $0.01 \leq y \leq 0.2$. Similarly to x and y, z may be within the following range: $0<z<1$, but from the viewpoint of ease of control of thermal stability and acquisition of a single phase, it is preferred to set z within the following range: $0<z \leq 0.5$.

The average particle diameter is preferably 70 nm or less, and more preferably 50 nm or less. When it exceeds 70 nm, the absorption amount becomes small when the powder is used as a radio wave absorber.

In the iron-based oxide magnetic powder of the present invention, in addition to the $\varepsilon$-type iron-based oxide crystal, an $\alpha$-type iron-based oxide, a $\gamma$-type iron-based oxide, or an $Fe_3 O_4$ crystal may be present as an impurity, however, the powder including such oxides is referred to as "iron-based oxide magnetic powder".

[Thermal Stability]

The thermal stability of the iron-based oxide magnetic powder obtained according to the present invention is evaluated based on the absolute values of $\Delta Hc_{60}$ and $\Delta Hc_{90}$ defined by the following formula (1) and formula (2) when coercive forces Hc as measured at a maximum applied magnetic field of 1193 kA/m (15 kOe) and a measurement temperature of 25°C, 60°C, and 90°C are represented by $Hc_{25}$, $Hc_{60}$, and $Hc_{90}$, respectively. The reason why the evaluation is performed based on the absolute values in that case is that in the iron-based oxide magnetic powder obtained by the production method of the present invention, $\Delta Hc_{60}$ and $\Delta Hc_{90}$ each may take a positive or negative value depending on the production conditions.

$$\Delta Hc_{60} = (Hc_{60} - Hc_{25})/Hc_{25} \qquad (1)$$

$$\Delta Hc_{90} = (Hc_{90} - Hc_{25})/Hc_{25} \qquad (2)$$

The absolute values of $\Delta Hc_{60}$ and $\Delta Hc_{90}$ are both preferably 0.15 (15%) or less. In the case where the absolute values of $\Delta Hc_{60}$ and $\Delta Hc_{90}$ each exceed 0.15, when the iron-based oxide magnetic powder is exposed to a high-temperature environment during use, the coercive force Hc decreases, and therefore, such absolute values are not preferred when considering the application thereof to a radio wave absorbing material or the like.

[Precursor]

In the production method of the present invention, as a precursor of the $\varepsilon$-type iron-based oxide particle powder, a hydroxide of iron, which is obtained by a wet method, and in which Fe sites are partially substituted by a substituent element, or a mixture of a hydroxide of iron and a hydroxide of a substituent element is used. Here, the hydroxide is a concept that collectively refers to a hydroxide, an oxyhydroxide, a hydrous oxide, and the like. In PTLs 2 and 3, as a method for producing the precursor, a method using an organic solvent such as a reverse micelle method and a method using only water as a reaction solvent are disclosed. In the production method of the present invention, any known method may be used in the production of the precursor, however, from the economic viewpoint, it is preferred to synthesize the precursor in an aqueous solution system without using an expensive organic solvent.

[Starting Material and Neutralization Step]

In the production method of the present invention, as a starting material for the precursor of the iron-based oxide magnetic powder, an acidic aqueous solution containing a trivalent iron ion or a trivalent iron ion and a metal ion of a metal element that finally substitutes an Fe site (hereinafter referred to as "raw material solution") is used. As the supply source of the iron ion or the metal ion of the substituent element, a water-soluble inorganic acid salt such as a nitrate, a sulfate, or a chloride is preferably used from the viewpoint of ease of availability and price. When such a metal salt is dissolved in water, the metal ion dissociates, and the aqueous solution exhibits acidity. When an alkali is added to the acidic aqueous solution containing the metal ion to neutralize the solution, an iron oxyhydroxide, or a mixture of an iron oxyhydroxide and a hydroxide of the substituent element, or an iron oxyhydroxide in which the Fe sites are partially substituted by another metal element is obtained. In the production method of the present invention, the iron oxyhydroxide, or the mixture of an iron oxyhydroxide and a hydroxide of the substituent element, or the iron oxyhydroxide in which the Fe sites are partially substituted by another metal element is used as the precursor of the iron-based oxide magnetic powder.

As will be described later, the feature of the production method of the present invention is to allow a phosphorus-containing ion to coexist when the precursor produced in the neutralization step is subjected to silicon oxide coating, however, prior to the neutralization treatment, the phosphorus-containing ion may be added to the raw material solution.

The total metal ion concentration in the raw material solution is not particularly specified in the present invention, but is preferably 0.01 mol/L or more and 0.5 mol/L or less. When the total metal ion concentration is less than 0.01 mol/L, the amount of the iron-based oxide magnetic powder obtained by a single reaction is small, and therefore, such a concentration is not preferred from the economic viewpoint. When the total metal ion concentration exceeds 0.5 mol/L, the reaction solution tends to be gelled due to rapid formation of a precipitate of a hydroxide, and therefore, such a concentration is not preferred.

In the production method of the present invention, precipitates of the hydroxides of the trivalent iron and the substituent element are precipitated by adding an alkali to the raw material solution, and therefore, it is preferred to stir the reaction solution during the neutralization treatment by a known mechanical means. For the neutralization step, various methods such as a method in which hydroxycarboxylic acid is allowed to coexist in the treatment liquid and a method in which the neutralization treatment is performed in two stages have been proposed, and any method may be used in the production method of the present invention, however, the pH of the final treatment liquid in the neutralization step is set to 7.0 or higher and 10.0 or lower. When the pH after neutralization is lower than 7.0, the production of the hydroxide of the substituent element tends to be insufficient. In addition, when the pH after neutralization exceeds 10.0, the effect of neutralization becomes saturated, and therefore, such pH ranges are not preferred.

Note that the values of pH described in the present description were measured using a glass electrode according to JIS Z 8802. The pH standard solution refers to a value measured with a pH meter calibrated using a suitable buffer solution corresponding to the pH range to be measured. Further, the pH described in the present description is a value obtained by directly reading a measured value shown by a pH meter compensated with a temperature compensation electrode under the reaction temperature conditions.

The alkali used for neutralization may be any of a hydroxide of an alkali metal or an alkaline earth metal, aqueous ammonia, and an ammonium salt such as ammonium hydrogen carbonate, but it is preferred to use aqueous ammonia or ammonium hydrogen carbonate which is less likely to leave impurities when the $\varepsilon$-type iron-based oxide is formed by a heat treatment in the end. Such an alkali may be added in the form of a solid to the aqueous solution of the starting material, but is preferably added in a state of an aqueous solution from the viewpoint of ensuring the uniformity of the reaction.

In the production method of the present invention, the reaction temperature during the neutralization treatment is not particularly limited, but is preferably set to 60°C or lower. When the reaction temperature exceeds 60°C, a magnetic powder obtained finally is likely to contain a different phase such as an $\alpha$-type, and therefore, such a temperature is not preferred.

[Coating Step with Silicon Oxide]

The precursor produced in the above neutralization step hardly undergoes phase transition to the $\varepsilon$-type iron-based oxide even if it is subjected to a heat treatment as it is, and therefore, in the production method of the present invention, the precursor is subjected to silicon oxide coating. As a coating method with silicon oxide, a sol-gel method is applied. Here, the sol-gel method refers to a process in which the surface of the precursor is coated with a hydrolysate of a silane derivative by utilizing a hydrolysis reaction of a silane derivative having a property of being hydrolyzed by reacting with water, followed by heating to cause gelation. Note that the silicon oxide here includes not only one having a stoichiometric composition, but also one having a nonstoichiometric composition such as the below-mentioned silanol derivative or the like. Note that in a slurry containing the precursor obtained in the above-mentioned neutralization step, the ion of the inorganic acid salt contained in the raw material solution or the alkali added in the neutralization step are contained, however, the slurry can be washed prior to the coating step, but this step can also be performed without washing the slurry.

It is preferred that the molar ratio (Si/ (Fe+M)) of the amount of Si of the silane compound to be added in this step to the sum (Fe+M) of the amount of the iron ion and the amount of the substituent metal ion contained in the raw material solution is 0.50 or more. When the (Si/(Fe+M)) is less than 0.50, the amount of the silanol derivative that coexists with the precipitate of an iron oxyhydroxide containing the substituent element is small, and an effect of more uniformly coating the precipitate of an iron oxyhydroxide containing the substituent element with the silanol derivative or a condensation reaction product thereof is lowered, and therefore, such a ratio is not preferred. The (Si/(Fe+M)) is more preferably 0.75 or more, and further more preferably 1.0 or more. In addition, the (Si/(Fe+M)) is preferably 10 or less. When the (Si/(Fe+M)) exceeds 10, the treatment amount in the below-mentioned heating step and silicon oxide removal step increases to increase the production cost, and therefore, such a ratio is not preferred. The (Si/ (Fe+M)) is more preferably 5.0 or less, and further more preferably 3.0 or less. Note that M here denotes the total amount of the metal ions that partially substitute the Fe sites.

In the case of the sol-gel method, to the slurry in which the precursor is dispersed, a silicon compound having a hydrolyzable group, for example, a silane compound such as tetraethoxysilane (TEOS), tetramethoxysilane (TMOS), or any of various types of silane coupling agents is added to cause a hydrolysis reaction under stirring, thereby coating the surface of the precursor crystal with the produced silanol derivative. When hydrolysis is caused, a known hydrolysis catalyst such as an acid catalyst or an alkali catalyst may be added, but it is preferred to add a catalyst in consideration of the treatment time. Representative examples thereof include hydrochloric acid as the acid catalyst and ammonia as the alkali catalyst. When the acid catalyst is used, it is necessary to add the acid catalyst in such an amount that the iron oxyhydroxide particles containing the substituent element are not dissolved. Note that as a specific method for coating with silicon oxide, the same method as the sol-gel method in a known process can be adopted. For example, the reaction temperature for the silicon oxide coating in the sol-gel method is 20°C or higher and 60°C or lower, and the reaction time is about 1 hour or more and 20 hours or less.

[Phosphorus-Containing Ion]

The feature of the production method of the present invention is to allow a phosphorus-containing ion to coexist in the aqueous solution when the precursor is coated with silicon oxide by a sol-gel method in the coating step.

As the supply source of the phosphorus-containing ion, a soluble phosphate ($PO_4^{3-}$) salt such as phosphoric acid and a monohydrogen salt or a dihydrogen salt of ammonium phosphate and sodium phosphate can be used. Here, phosphoric acid is a tribasic acid and dissociates in three stages in the aqueous solution, and therefore can take the existence forms of a phosphate ion, a phosphate monohydrogen ion, and a phosphate dihydrogen ion in the aqueous solution, however, the existence form thereof is determined not by the type of a chemical used as the supply source of the phosphate ion, but by the pH of the aqueous solution, and therefore, the ions containing a phosphate group described above are collectively referred to as "phosphate ion". Further, in the case of the present invention, as the supply source of the phosphate ion, diphosphoric acid (pyrophosphoric acid) that is condensed phosphoric acid can also be used. In addition, in the present invention, in place of the phosphate ion ($PO_4^{3-}$), a phosphorous ion ($PO_3^{3-}$) or a hypophosphite ion ($PO_2^{2-}$) having a different oxidation number of P can also be used. These oxide ions containing phosphorus (P) are collectively referred to as "phosphorus-containing ion".

As an embodiment for allowing the phosphorus-containing ion to coexist, the following three embodiments can be considered. In a first embodiment, the phosphorus-containing ion is added to the raw material solution in the neutralization step, the precursor is formed in the presence of the phosphorus-containing ion, and thereafter, the silicon compound having a hydrolysable group is added to the slurry containing the obtained precursor and the phosphorus-containing ion. In a second embodiment, when the silicon compound having a hydrolysable group is added to the slurry in which the precursor is dispersed, the phosphorus-containing ion is simultaneously added. In a third embodiment, after the silicon compound having a hydrolysable group is added to the slurry in which the precursor is dispersed, the phosphorus-containing ion is added before the reaction for coating the precursor with silicon oxide is completed. In the production method of the present invention, the ε-type iron-based oxide magnetic powder having good thermal stability and a small change in coercive force even in a high-temperature environment can be obtained in any embodiment.

The reason why the ε-type iron-based oxide magnetic powder having good thermal stability can be obtained finally by performing a heating treatment after the precursor is coated with the hydrolysate of the silane compound in the coexistence of the phosphorus-containing ion is currently unknown, but is considered that the physical properties of the silicon oxide coating are changed by the reaction between silicon oxide and the phosphorus-containing ion. It is also considered that a change in the aggregation state of the precursor in the slurry due to adsorption of the phosphorus-containing ion onto the surface of the precursor so as to change the isoelectric point of the precursor may have an influence thereon. Further, it is also considered that due to the change in the physical properties of the silicon oxide coating, sintering of the iron-based oxide magnetic powder precursor particles and diffusion of the substituent element inside the particles are promoted, so that the element substitution amount for the substitution site effective in improving thermal stability has increased as compared with a system in which phosphoric acid is not added.

The amount of the phosphorus-containing ion allowed to coexist in the slurry in the coating step is preferably such that the molar ratio (P/Si) to the amount of Si of the silane compound added in the coating step is 0.0001 or more and 0.01 or less. When the P/Si is less than 0.0001, the firing promoting effect of the addition of phosphoric acid cannot be obtained. The P/Si is more preferably 0.0005 or more, and more preferably 0.001 or more. Further, when the P/Si exceeds 0.01, the proportion of the α-type iron-based oxide powder contained in the final product increases so that the absorption amount decreases when the product is used as a radio wave absorbing material, and also the thermal stability of the iron-based oxide magnetic powder to be obtained deteriorates, and the coercive force greatly changes in a high-temperature environment, and therefore, such a ratio is not preferred. The P/Si is more preferably 0.008 or less, and more preferably 0.006 or less.

[Recovery Step]

The precursor coated with silicon oxide obtained in the coating step is recovered using known solid-liquid separation such as filtration, centrifugation, or decantation. Here, after the coating treatment, water washing may be performed before the solid-liquid separation. Further, during the solid-liquid separation, the solid-liquid separation may be performed by adding a flocculant. Note that the solid-liquid separation may be performed a plurality of times by performing water washing therebetween.

[Heating Step]

In the production method of the present invention, the ε-type iron-based oxide is obtained by subjecting the precursor coated with silicon oxide to a heating treatment. Prior to the heating treatment, washing and drying steps may be provided. The drying treatment is aimed at removing water adhered to the precipitate, and may be performed at a temperature of about 110°C not lower than the boiling point of water. The heating treatment is performed in an oxidative atmosphere, and the oxidative atmosphere may be an air atmosphere. The heating treatment temperature varies depending on the coating amount of silicon oxide and therefore cannot be generalized, but the heating can be generally performed within a range of 700°C or higher and 1300°C or lower. When the heating temperature is too low, a different phase or a compound whose phase transition is not sufficient is likely to be mixed therein. Further, the particle diameter of the obtained product sometimes becomes small, and therefore, such a temperature is not preferred. When the lower limit of the heating temperature is set to 700°C or higher, the $\varepsilon$-type iron oxide that is the target of the present invention can be selectively and stably obtained, and as a result, the production of a different phase or a compound whose phase transition is not sufficient can be suppressed, and therefore, a magnetic powder that has uniform magnetic characteristics and is suitable for high-density magnetic recording is obtained. When the heating temperature is high, $\alpha$-$Fe_2O_3$ that is a thermodynamically stable phase (which is an impurity of $\varepsilon$-$Fe_2O_3$) is likely to be produced, and therefore, the heating treatment is performed preferably at 900°C or higher and 1200°C or lower, and more preferably at 950°C or higher and 1150°C or lower. The heating treatment time can be adjusted within a range of about 0.5 hours or more and 10 hours or less, but favorable results are easily obtained within a range of 2 hours or more and 5 hours or less.

[Dissolution Step]

The silicon oxide coating layer obtained in the above-mentioned heating step does not contribute as a radio wave absorbing material, and deteriorates the radio wave absorption ability when it remains, and therefore, the silicon oxide coating is dissolved and removed by immersing the $\varepsilon$-type iron-based oxide coated with silicon oxide in an alkali solution. In the case of the $\varepsilon$-type iron-based oxide magnetic powder of the present invention, when an insulating coating layer is needed, after undergoing this step, silicon oxide coating is performed again using the sol-gel method under conditions in which the phosphorus-containing ion does not exist.

As a specific method, since silicon oxide is soluble in an alkaline aqueous solution, silicon oxide can be dissolved and removed by immersing the $\varepsilon$-type iron-based oxide coated with silicon oxide after the heating treatment in an aqueous solution in which a strong alkali such as NaOH or KOH is dissolved and stirring the aqueous solution. When the dissolution rate is increased, the alkali aqueous solution may be heated. Representatively, when an alkali such as NaOH is added in an amount not less than 3 molar times the amount of silicon oxide, and the slurry containing the powder is stirred in a state where the temperature of the aqueous solution is 60°C or higher and 70°C or lower, silicon oxide can be favorably dissolved.

The $\varepsilon$-type iron-based oxide magnetic powder obtained by dissolving and removing the silicon oxide coating is recovered using a known solid-liquid separation means, and then subjected to a water washing treatment or a drying treatment as needed.

[Compositional Analysis by High-Frequency Inductively Coupled Plasma Atomic Emission Spectroscopy (ICP-AES)]

The compositional analysis of the obtained $\varepsilon$-type iron-based oxide magnetic powder was performed by a dissolution method. In the compositional analysis, ICP-720ES manufactured by Agilent Technologies, Inc. was used, and the analysis was performed by setting the measurement wavelength (nm) as follows: Fe: 259.940 nm, Ga: 294.363 nm, Co: 230.786 nm, Ti: 336.122 nm, Si: 288.158 nm, and Al: 396.152 nm.

[Measurement of Magnetic Hysteresis Curve (Bulk B-H Curve)]

By using a vibrating sample magnetometer VSM (VSM-5, manufactured by Toei Industry Co., Ltd.), a magnetic hysteresis curve was measured at a maximum applied magnetic field of 1193 kA/m (15 kOe), an M measurement range of 0.005 A·$m^2$ (5 emu), a step bit of 80 bit, a time constant of 0.03 sec, and a wait time of 0.1 sec. The coercive force Hc and the saturation magnetization $\sigma$s were evaluated based on a B-H curve. As for the temperature characteristics of the magnetic characteristics, a temperature controller (TTC-I, manufactured by Toei Industry Co., Ltd.) was used, a B-H curve was measured by adjusting a sample specimen section to 25°C, 60°C, and 90°C, the Hc values at 25°C, 60°C, and 90°C ($Hc_{25}$, $Hc_{60}$, and $Hc_{90}$) were determined, and the change rates of Hc with respect to $Hc_{25}$: $\Delta Hc_{60}$ and $\Delta Hc_{90}$ were calculated.

[Evaluation of Crystallinity by X-ray Diffractometry (XRD)]

The obtained samples were subjected to powder X-ray diffraction (XRD: sample horizontal-type multipurpose X-ray diffractometer Ultima IV, manufactured by Rigaku Corporation, radiation source: CuK$\alpha$, voltage: 40 kV, current: 40 mA, $2\theta = 10°$ or more and 70° or less). The obtained diffraction pattern was evaluated by a Rietveld analysis, and the crystal structure and the existence ratio of an $\alpha$-phase were confirmed.

[Evaluation of Particle Diameter by Transmission Electron Microscope (TEM)]

The particle diameter of $\varepsilon$-type iron oxide was determined by transmission electron microscope (TEM) observation. In the TEM observation, JEM-1011 manufactured by JEOL, Ltd. was used. With respect to a certain particle, the length of the long side of a rectangle circumscribing the particle and having the smallest area is defined as the particle diameter (major axis) of the particle. Specifically, in a TEM image captured at a magnification of 100,000 times, 300 particles whose entire periphery can be observed were randomly selected, the particle diameters thereof were measured, and the average thereof was determined as the average particle diameter of the ε-type iron oxide.

[BET Specific Surface Area]

The BET specific surface area was determined by a BET single point method using Macsorb Model-1210 manufactured by Mountech Co., Ltd.

Examples

[Comparative Example 1]

In a 5 L reaction vessel, 527.22 g of a ferric (III) sulfate solution having an Fe concentration of 11.58 mass%, 71.61 g of a Ga(III) nitrate solution having a Ga concentration of 11.55 mass%, 9.57 g of cobalt(II) nitrate hexahydrate with a purity of 97%, and 10.11 g of titanium(IV) sulfate having a Ti concentration of 15.1 mass% were dissolved in 3,688.56 g of pure water while mechanically stirring with a stirring blade in the air atmosphere (procedure 1). The pH of the resulting solution was about 1. The molar ratio of metal ions in the prepared solution is as follows: Fe:Ga:Co:Ti = 1.714:0.186:0.050:0.050. Note that the Roman numeral in parentheses following the reagent name denotes the valence of the metal element.

While mechanically stirring the prepared solution with a stirring blade under the condition of 30°C in the air atmosphere, 388.91 g of a 22.30 mass% ammonia solution was added thereto over 10 minutes, and after completion of the dropwise addition, stirring was continued for 30 minutes to age the produced precipitate. At that time, the pH of the slurry containing the precipitate was about 9 (procedure 2). While stirring the slurry obtained by the procedure 2, 794.40 g of tetraethoxysilane (TEOS) with a purity of 95.0 mass% was added dropwise thereto over 10 minutes at 30°C in the air. Thereafter, stirring was continued as such for 20 hours, thereby coating the precipitate with a hydrolysate of the silane compound produced by hydrolysis (procedure 3). Note that the molar ratio Si/(Fe+M) of the amount of Si element contained in tetraethoxysilane added dropwise to the slurry to the amount of iron, gallium, cobalt, and titanium ions contained in the solution under the condition is 2.84.

The slurry obtained by the procedure 3 was filtered, and after water in the obtained precipitate coated with the hydrolysate (silanol derivative) of the silane compound was drained off as much as possible, the precipitate was redispersed in pure water and repulp washing was performed. The slurry after washing was filtered again, and the resulting cake was dried at 110°C in the air (procedure 4).

The dried product obtained by the procedure 4 was subjected to a heating treatment for 4 hours at 1090°C in the air using a box-type firing furnace, whereby an iron-based oxide magnetic powder coated with silicon oxide was obtained (procedure 5). Note that the silanol derivative is converted to an oxide by dehydration when the heat treatment is performed in the air atmosphere.

The production conditions such as the preparation conditions for the raw material solution of this Comparative Example are shown in Table 1. In Table 1, the production conditions of the other Examples and Comparative Examples are also shown.

The heat-treated powder obtained by the procedure 5 was stirred at about 60°C for 24 hours in a 20 mass% NaOH aqueous solution to perform a treatment of removing the silicon oxide coating on the surfaces of the particles (procedure 6). Subsequently, washing was performed using a centrifuge until the electrical conductivity of the slurry reached 15 mS/m or less, followed by filtering through a membrane filter and drying, and the resulting iron-based oxide magnetic powder was subjected to a chemical analysis of the composition thereof, XRD measurement, magnetic characteristic measurement, and the like. The measurement results are shown in Table 2. In Table 2, the physical property values of the iron-based oxide magnetic powders obtained in the other Examples and Comparative Examples are also shown.

As apparent from Table 2, the chemical compositions of the obtained iron-based oxide magnetic powders were substantially the same as the compositions of the raw material solutions at the time of preparation.

The $\Delta Hc_{60}$ and $\Delta Hc_{90}$ of the iron-based oxide magnetic powder obtained in this Comparative Example are -0.053 and -0.194, respectively, and the absolute value of $\Delta Hc_{90}$ shows a high value exceeding 0.15, and it is found that the thermal stability when the atmospheric temperature is increased to 90°C is poor.

[Comparative Example 2]

In a 1 L reaction vessel, 104.81 g of a ferric (III) sulfate solution having an Fe concentration of 11.65 mass%, 14.32 g of a Ga(III) nitrate solution having a Ga concentration of 11.55 mass%, 1.91 g of cobalt(II) nitrate hexahydrate with a purity of 97%, 2.02 g of titanium(IV) sulfate having a Ti concentration of 15.1 mass%, and 1.00 g of 85 mass% $H_3PO_4$ were dissolved in 737.71 g of pure water while mechanically stirring with a stirring blade in the air atmosphere (procedure 1). The pH of the resulting solution was about 1. The molar ratio of metal ions in the prepared solution is as follows: Fe:Ga:Co:Ti = 1.714:0.186:0.050:0.050.

While mechanically stirring the prepared solution with a stirring blade under the condition of 30°C in the air atmosphere, 77.78 g of a 22.30 mass% ammonia solution was added thereto over 10 minutes, and after completion of the dropwise addition, stirring was continued for 30 minutes to age the produced precipitate. At that time, the pH of the slurry containing the precipitate was about 9 (procedure 2). While stirring the slurry obtained by the procedure 2, 158.88 g of tetraethoxysilane (TEOS) with a purity of 95.0 mass% was added dropwise thereto over 10 minutes at 30°C in the air. Thereafter, stirring was continued as such for 20 hours, thereby coating the precipitate with a hydrolysate of the silane compound produced by hydrolysis (procedure 3). Note that the molar ratio Si/(Fe+M) of the amount of Si element contained in tetraethoxysilane added dropwise to the slurry to the amount of iron, gallium, cobalt, and titanium ions contained in the solution under the conditions is 2.84. Further, the molar ratio P/(Fe+M) of the amount of P element contained in $H_3PO_4$ to the amount of iron, gallium, cobalt, and titanium ions contained in the solution is 0.034, and the molar ratio P/Si of the amount of P element contained in $H_3PO_4$ to the amount of Si element contained in tetraethoxysilane added dropwise to the slurry under the conditions is 0.0012. Thereafter, the treatment was performed in the same manner as in Comparative Example 1.

The $\Delta Hc_{60}$ and $\Delta Hc_{90}$ of the iron-based oxide magnetic powder obtained in this Comparative Example were +0.530 and +0.716, respectively, and the absolute values of both showed high values exceeding 0.15.

[Example 1]

An iron-based oxide magnetic powder was produced under the same conditions as in Comparative Example 2 except that the amount of 85 mass% $H_3PO_4$ used was changed to 0.5 g. Note that the molar ratio P/(Fe+M) of the amount of P element contained in $H_3PO_4$ to the amount of iron, gallium, cobalt, and titanium ions contained in the solution under the conditions is 0.017. Further, the molar ratio P/Si of the amount of P element contained in $H_3PO_4$ to the amount of Si element contained in tetraethoxysilane added dropwise to the slurry under the conditions is 0.006. The results of XRD measurement of the obtained iron-based oxide magnetic powder are shown in Fig. 1. The obtained iron-based oxide magnetic powder showed substantially the same crystal structure as that of $\varepsilon$-$Fe_2O_3$. The measurement results indicate that most of the iron-based oxide magnetic powder obtained by the production method of the present invention is magnetic particles of an iron-based oxide in which the Fe sites of $\varepsilon$-$Fe_2O_3$ are partially substituted by another metal element. The $\Delta Hc_{60}$ and $\Delta Hc_{90}$ of the iron-based oxide magnetic powder obtained in this Example were +0.150 and +0.148, respectively, and the absolute values of both showed low values of 0.15 or less, and the change in Hc with respect to the temperature was small, and Hc was stable.

[Example 2]

An iron-based oxide magnetic powder was produced under the same conditions as in Comparative Example 2 except that the amount of 85 mass% $H_3PO_4$ used was changed to 0.33 g. Note that the molar ratio P/(Fe+M) of the amount of P element contained in $H_3PO_4$ to the amount of iron, gallium, cobalt, and titanium ions contained in the solution under the conditions is 0.011. Further, the molar ratio P/Si of the amount of P element contained in $H_3PO_4$ to the amount of Si element contained in tetraethoxysilane added dropwise to the slurry under the conditions is 0.004. The $\Delta Hc_{60}$ and $\Delta Hc_{90}$ of the iron-based oxide magnetic powder obtained in this Example were +0.101 and +0.056, respectively, and the absolute values of both showed low values of 0.15 or less, and the change in Hc with respect to the temperature was small, and Hc was stable.

[Example 3]

An iron-based oxide magnetic powder was produced under the same conditions as in Comparative Example 2 except that the amount of 85 mass% $H_3PO_4$ used was changed to 0.25 g. Note that the molar ratio P/(Fe+M) of the amount of P element contained in $H_3PO_4$ to the amount of iron, gallium, cobalt, and titanium ions contained in the solution under the conditions is 0.009. Further, the molar ratio P/Si of the amount of P element contained in $H_3PO_4$ to the amount of Si element contained in tetraethoxysilane added dropwise to the slurry under the conditions is 0.003. The $\Delta Hc_{60}$ and $\Delta Hc_{90}$ of the iron-based oxide magnetic powder obtained in this Example were +0.021 and -0.069, respectively, and the absolute values of both showed low values of 0.15 or less, and the change in Hc with respect to the temperature was small, and Hc was stable.

[Example 4]

An iron-based oxide magnetic powder was produced under the same conditions as in Comparative Example 2 except that the amount of 85 mass% $H_3PO_4$ used was changed to 0.13 g. Note that the molar ratio P/(Fe+M) of the amount of P element contained in $H_3PO_4$ to the amount of iron, gallium, cobalt, and titanium ions contained in the solution under the conditions is 0.004. Further, the molar ratio P/Si of the amount of P element contained in $H_3PO_4$ to the amount of Si element contained in tetraethoxysilane added dropwise to the slurry under the conditions is 0.0015. The $\Delta Hc_{60}$ and $\Delta Hc_{90}$ of the iron-based oxide magnetic powder obtained in this Example were -0.019 and -0.140, respectively, and the absolute values of both showed low values of 0.15 or less, and the change in Hc with respect to the temperature was small, and Hc was stable.

[Example 5]

An iron-based oxide magnetic powder was produced under the same conditions as in Example 2 except that the amounts of respective raw materials used were changed as follows: pure water: 741.21 g, a ferric(III) sulfate solution having an Fe concentration of 11.65 mass%: 109.46 g, a Ga(III) nitrate solution having a Ga concentration of 11.55 mass%: 8.47 g, and a 22.30 mass% ammonia solution: 78.15 g. The molar ratio of metal ions in the prepared solution is as follows: Fe:Ga:Co:Ti = 1.790:0.110:0.050:0.050. Further, the molar ratio Si/(Fe+M) of the amount of Si element contained in tetraethoxysilane added dropwise to the slurry to the amount of iron, gallium, cobalt, and titanium ions contained in the solution under the conditions is 2.84. The $\Delta Hc_{60}$ and $\Delta Hc_{90}$ of the iron-based oxide magnetic powder obtained in this Example were +0.097 and +0.090, respectively, and the absolute values of both showed low values of 0.15 or less, and the change in Hc with respect to the temperature was small, and Hc was stable.

[Example 6]

An iron-based oxide magnetic powder was produced under the same conditions as in Example 5 except that the heating treatment conditions using the box-type firing furnace were changed to 1050°C in the air for 4 hours. The $\Delta Hc_{60}$ and $\Delta Hc_{90}$ of the iron-based oxide magnetic powder obtained in this Example were -0.001 and -0.070, respectively, and the absolute values of both showed low values of 0.15 or less, and the change in Hc with respect to the temperature was small, and Hc was stable.

[Example 7]

An iron-based oxide magnetic powder was produced under the same conditions as in Example 2 except that the amounts of respective raw materials used were changed as follows: a ferric(III) sulfate solution having an Fe concentration of 11.65 mass%: 106.64 g, a Ga(III) nitrate solution having a Ga concentration of 11.55 mass%: 14.32 g, cobalt(II) nitrate hexahydrate with a purity of 97%: 1.34 g, and titanium(IV) sulfate having a Ti concentration of 15.1 mass%: 1.42 g. The molar ratio of metal ions in the prepared solution is as follows: Fe:Ga:Co:Ti = 1.744:0.186:0.035:0.035. Further, the molar ratio Si/(Fe+M) of the amount of Si element contained in tetraethoxysilane added dropwise to the slurry to the amount of iron, gallium, cobalt, and titanium ions contained in the solution under the conditions is 2.84. The $\Delta Hc_{60}$ and $\Delta Hc_{90}$ of the iron-based oxide magnetic powder obtained in this Example were -0.031 and -0.119, respectively, and the absolute values of both showed low values of 0.15 or less, and the change in Hc with respect to the temperature was small, and Hc was stable.

[Example 8]

An iron-based oxide magnetic powder was produced under the same conditions as in Example 1 except that the amounts of respective raw materials used were changed as follows: a ferric(III) sulfate solution having an Fe concentration of 11.65 mass%: 107.87 g, a Ga(III) nitrate solution having a Ga concentration of 11.55 mass%: 14.32 g, cobalt(II) nitrate hexahydrate with a purity of 97%: 0.96 g, and titanium(IV) sulfate having a Ti concentration of 15.1 mass%: 1.01 g. The molar ratio of metal ions in the prepared solution is as follows: Fe:Ga:Co:Ti = 1.764:0.186:0.025:0.025. Further, the molar ratio Si/(Fe+M) of the amount of Si element contained in tetraethoxysilane added dropwise to the slurry to the amount of iron, gallium, cobalt, and titanium ions contained in the solution under the conditions is 2.84. The $\Delta Hc_{60}$ and $\Delta Hc_{90}$ of the iron-based oxide magnetic powder obtained in this Example were -0.046 and -0.133, respectively, and the absolute values of both showed low values of 0.15 or less, and the change in Hc with respect to the temperature was small, and Hc was stable.

[Comparative Example 3]

An iron-based oxide magnetic powder was produced under the same conditions as in Comparative Example 1 except that the amounts of respective raw materials used were changed as follows: a ferric(III) sulfate solution having an Fe concentration of 11.65 mass%: 529.56 g, a Ga(III) nitrate solution having a Ga concentration of 11.55 mass%: 71.61 g, cobalt(II) nitrate hexahydrate with a purity of 97%: 7.65 g, and titanium(IV) sulfate having a Ti concentration of 15.1 mass%: 8.06 g. The molar ratio of metal ions in the prepared solution is as follows: Fe:Ga:Co:Ti = 1.734:0.186:0.040:0.040. Note that the numeral in parentheses following the reagent name denotes the valence of the metal element. The $\Delta Hc_{60}$ and $\Delta Hc_{90}$ of the iron-based oxide magnetic powder obtained in this Example were -0.087 and -0.230, respectively, and the absolute value of $\Delta Hc_{90}$ showed a high value exceeding 0.15.

[Example 9]

An iron-based oxide magnetic powder was produced under the same conditions as in Example 1 except that the amounts of respective raw materials used were changed as follows: a ferric(III) sulfate solution having an Fe concentration of 11.65 mass%: 107.26 g, a Ga(III) nitrate solution having a Ga concentration of 11.55 mass%: 14.32 g, cobalt(II) nitrate hexahydrate with a purity of 97%: 1.15 g, and titanium(IV) sulfate having a Ti concentration of 15.1 mass%: 1.21 g. The molar ratio of metal ions in the prepared solution is as follows: Fe:Ga:Co:Ti = 1.754:0.186:0.03:0.03. Further, the molar ratio Si/(Fe+M) of the amount of Si element contained in tetraethoxysilane added dropwise to the slurry to the amount of iron, gallium, cobalt, and titanium ions contained in the solution under the conditions is 2.84. The $\Delta Hc_{60}$ and $\Delta Hc_{90}$ of the iron-based oxide magnetic powder obtained in this Example were -0.008 and -0.075, respectively, and the absolute values of both showed low values of 0.15 or less, and the change in Hc with respect to the temperature was small, and Hc was stable.

[Example 10]

An iron-based oxide magnetic powder was produced under the same conditions as in Example 1 except that the amounts of respective raw materials used were changed as follows: a ferric(III) sulfate solution having an Fe concentration of 11.65 mass%: 106.52 g, a Ga(III) nitrate solution having a Ga concentration of 11.55 mass%: 14.32 g, cobalt(II) nitrate hexahydrate with a purity of 97%: 1.38 g, and titanium(IV) sulfate having a Ti concentration of 15.1 mass%: 1.46 g. The molar ratio of metal ions in the prepared solution is as follows: Fe:Ga:Co:Ti = 1.742:0.186:0.036:0.036. Further, the molar ratio Si/(Fe+M) of the amount of Si element contained in tetraethoxysilane added dropwise to the slurry to the amount of iron, gallium, cobalt, and titanium ions contained in the solution under the conditions is 2.84. The $\Delta Hc_{60}$ and $\Delta Hc_{90}$ of the iron-based oxide magnetic powder obtained in this Example were +0.013 and -0.031, respectively, and the absolute values of both showed low values of 0.15 or less, and the change in Hc with respect to the temperature was small, and Hc was stable.

[Example 11]

An iron-based oxide magnetic powder was produced under the same conditions as in Example 1 except that the amounts of respective raw materials used were changed as follows: a ferric(III) sulfate solution having an Fe concentration of 11.65 mass%: 106.89 g, a Ga(III) nitrate solution having a Ga concentration of 11.55 mass%: 14.32 g, cobalt(II) nitrate hexahydrate with a purity of 97%: 1.26 g, and titanium(IV) sulfate having a Ti concentration of 15.1 mass%: 1.33 g. The molar ratio of metal ions in the prepared solution is as follows: Fe:Ga:Co:Ti = 1.748:0.186:0.033:0.033. Further, the molar ratio Si/(Fe+M) of the amount of Si element contained in tetraethoxysilane added dropwise to the slurry to the amount of iron, gallium, cobalt, and titanium ions contained in the solution under the conditions is 2.84. The $\Delta Hc_{60}$ and $\Delta Hc_{90}$ of the iron-based oxide magnetic powder obtained in this Example were -0.001 and -0.061, respectively, and the absolute values of both showed low values of 0.15 or less, and the change in Hc with respect to the temperature was small, and Hc was stable.

[Example 12]

An iron-based oxide magnetic powder was produced under the same conditions as in Example 1 except that the amounts of respective raw materials used were changed as follows: a ferric(III) sulfate solution having an Fe concentration of 11.65 mass%: 101.51 g, aluminum(III) nitrate nonahydrate with a purity of 98%: 11.72 g, cobalt(II) nitrate hexahydrate with a purity of 97%: 1.91 g, and titanium(IV) sulfate having a Ti concentration of 15.1 mass%: 2.02 g. The molar ratio of metal ions in the prepared solution is as follows: Fe:Al:Co:Ti = 1.660:0.240:0.050:0.050. Further, the molar ratio Si/(Fe+M) of the amount of Si element contained in tetraethoxysilane added dropwise to the slurry to the amount of iron, gallium, cobalt, and titanium ions contained in the solution under the conditions is 2.84. The $\Delta Hc_{60}$ and $\Delta Hc_{90}$ of the iron-based oxide magnetic powder obtained in this Example were +0.054 and +0.027, respectively, and the absolute values of both showed low values of 0.15 or less, and the change in Hc with respect to the temperature was small, and Hc was stable.

[Example 13]

An iron-based oxide magnetic powder was produced under the same conditions as in Example 2 except that the amounts of respective raw materials used were changed as follows: a ferric(III) sulfate solution having an Fe concentration of 11.65 mass%: 106.22 g, a Ga(III) nitrate solution having a Ga concentration of 11.55 mass%: 14.32 g, cobalt(II) nitrate hexahydrate with a purity of 97%: 1.47 g, and titanium(IV) sulfate having a Ti concentration of 15.1 mass%: 1.56 g. The molar ratio of metal ions in the prepared solution is as follows: Fe:Ga:Co:Ti = 1.737:0.186:0.0385:0.0385. Further, the molar ratio Si/(Fe+M) of the amount of Si element contained in tetraethoxysilane added dropwise to the slurry to the amount of iron, gallium, cobalt, and titanium ions contained in the solution under the conditions is 2.84. The $\Delta Hc_{60}$ and $\Delta Hc_{90}$ of the iron-based oxide magnetic powder obtained in this Example were -0.004 and -0.074, respectively, and the absolute values of both showed low values of 0.15 or less, and the change in Hc with respect to the temperature was small, and Hc was stable.

[Comparative Example 4]

An iron-based oxide magnetic powder was produced under the same conditions as in Comparative Example 1 except that the amounts of respective raw materials used were changed as follows: a ferric(III) sulfate solution having an Fe concentration of 11.65 mass%: 430.63 g, a Ga(III) nitrate solution having a Ga concentration of 11.55 mass%: 115.49 g, cobalt(II) nitrate hexahydrate with a purity of 97%: 28.70 g, and titanium(IV) sulfate having a Ti concentration of 15.1 mass%: 30.33 g. The molar ratio of metal ions in the prepared solution is as follows: Fe:Ga:Co:Ti = 1.400:0.300:0.150:0.150. The $\Delta Hc_{60}$ and $\Delta Hc_{90}$ of the iron-based oxide magnetic powder obtained in this Example were - 0.711 and -0.846, respectively, and the absolute value of $\Delta Hc_{90}$ showed a high value exceeding 0.15.

[Comparative Example 5]

An iron-based oxide magnetic powder was produced under the same conditions as in Comparative Example 1 except that the amounts of respective raw materials used were changed as follows: a ferric(III) sulfate solution having an Fe concentration of 11.65 mass%: 522.91 g, cobalt(II) nitrate hexahydrate with a purity of 97%: 28.70 g, and titanium(IV) sulfate having a Ti concentration of 15.1 mass%: 30.33 g. The molar ratio of metal ions in the prepared solution is as follows: Fe:Ga:Co:Ti = 1.400:0.000:0.150:0.150. The $\Delta Hc_{60}$ and $\Delta Hc_{90}$ of the iron-based oxide magnetic powder obtained in this Example were -0.623 and -0.830, respectively, and the absolute value of $\Delta Hc_{90}$ showed a high value exceeding 0.15.

[Table 1]

Table 1

| | Preparation composition (molar ratio) | | | | | Phosphorus addition amount (molar ratio) | | Firing temperature °C |
|---|---|---|---|---|---|---|---|---|
| | Fe | Ga | Al | Ti | Co | P/Si | P/(Fe+M) | |
| Comparative example 1 | 1.714 | 0.186 | - | 0.050 | 0.050 | - | - | 1090 |
| Comparative example 2 | 1.714 | 0.186 | - | 0.050 | 0.050 | 0.012 | 0.034 | 1090 |
| Example 1 | 1.714 | 0.186 | - | 0.050 | 0.050 | 0.006 | 0.017 | 1090 |
| Example 2 | 1.714 | 0.186 | - | 0.050 | 0.050 | 0.004 | 0.011 | 1090 |
| Example 3 | 1.714 | 0.186 | - | 0.050 | 0.050 | 0.003 | 0.009 | 1090 |
| Example 4 | 1.714 | 0.186 | - | 0.050 | 0.050 | 0.0015 | 0.004 | 1090 |

(continued)

| | Preparation composition (molar ratio) | | | | | Phosphorus addition amount (molar ratio) | | Firing temperature °C |
|---|---|---|---|---|---|---|---|---|
| | Fe | Ga | Al | Ti | Co | P/Si | P/(Fe+M) | |
| Example 5 | 1.790 | 0.110 | - | 0.050 | 0.050 | 0.004 | 0.011 | 1090 |
| Example 6 | 1.790 | 0.110 | - | 0.050 | 0.050 | 0.004 | 0.011 | 1050 |
| Example 7 | 1.744 | 0.186 | - | 0.035 | 0.035 | 0.004 | 0.011 | 1090 |
| Example 8 | 1.764 | 0.186 | - | 0.025 | 0.025 | 0.006 | 0.017 | 1090 |
| Comparative example 3 | 1.734 | 0.186 | - | 0.040 | 0.040 | - | - | 1090 |
| Example 9 | 1.754 | 0.186 | - | 0.030 | 0.030 | 0.006 | 0.017 | 1090 |
| Example 10 | 1.742 | 0.186 | - | 0.036 | 0.036 | 0.006 | 0.017 | 1090 |
| Example 11 | 1.748 | 0.186 | - | 0.033 | 0.033 | 0.006 | 0.017 | 1090 |
| Example 12 | 1.660 | - | 0.240 | 0.050 | 0.050 | 0.006 | 0.017 | 1090 |
| Example 13 | 1.737 | 0.186 | - | 0.039 | 0.039 | 0.004 | 0.011 | 1090 |
| Comparative example 4 | 1.400 | 0.300 | - | 0.150 | 0.150 | - | - | 1090 |
| Comparative example 5 | 1.700 | 0.000 | - | 0.150 | 0.150 | - | - | 1090 |

[Table 2]

Table 2

| | Composition (molar ratio) | | | | | BET specific surface area (m²/g) | Average particle diameter (nm) | Magnetic characteristics | | | | | | | |
| | | | | | | | | Hc (kA/m) | | | σs (Am²/kg) | | | Absolute value of $\Delta Hc_{60}$ | Absolute value of $\Delta Hc_{90}$ |
| | Fe | Ga | Al | Ti | Co | | | 25°C | 60°C | 90°C | 25°C | 60°C | 90°C | | |
|---|---|---|---|---|---|---|---|---|---|---|---|---|---|---|---|
| Comparative example 1 | 1.73 | 0.17 | - | 0.06 | 0.05 | 50.8 | 21.1 | 360 | 341 | 290 | 17.2 | 15.4 | 13.7 | 0.053 | 0.194 |
| Comparative example 2 | 1.72 | 0.17 | - | 0.06 | 0.05 | 19.1 | 53.0 | 127 | 195 | 218 | 10.3 | 9.2 | 8.0 | 0.530 | 0.716 |
| Example 1 | 1.72 | 0.17 | - | 0.06 | 0.05 | 28.8 | 31.4 | 265 | 305 | 304 | 17.3 | 15.5 | 13.7 | 0.150 | 0.148 |
| Example 2 | 1.72 | 0.17 | - | 0.06 | 0.05 | 32.7 | 25.8 | 283 | 311 | 299 | 17.4 | 15.3 | 13.6 | 0.101 | 0.056 |
| Example 3 | 1.72 | 0.18 | - | 0.06 | 0.05 | 39.1 | 21.9 | 331 | 337 | 308 | 17.6 | 15.6 | 13.9 | 0.021 | 0.069 |
| Example 4 | 1.72 | 0.17 | - | 0.06 | 0.05 | 44.1 | 18.8 | 333 | 326 | 286 | 17.0 | 15.2 | 13.5 | 0.019 | 0.140 |
| Example 5 | 1.79 | 0.09 | - | 0.06 | 0.05 | 28.2 | 28.0 | 308 | 338 | 335 | 13.4 | 12.2 | 11.0 | 0.097 | 0.090 |
| Example 6 | 1.79 | 0.10 | - | 0.06 | 0.05 | 47.8 | 16.5 | 409 | 409 | 380 | 14.6 | 14.0 | 12.6 | 0.001 | 0.070 |
| Example 7 | 1.75 | 0.17 | - | 0.04 | 0.04 | 30.4 | 22.6 | 502 | 486 | 442 | 15.6 | 14.2 | 12.8 | 0.031 | 0.119 |
| Example 8 | 1.75 | 0.16 | - | 0.05 | 0.03 | 25.2 | 36.6 | 653 | 623 | 566 | 14.4 | 13.2 | 12.2 | 0.046 | 0.133 |
| Comparative example 3 | 1.74 | 0.17 | - | 0.05 | 0.04 | 47.6 | 18.9 | 487 | 445 | 375 | 16.5 | 14.5 | 13.1 | 0.087 | 0.230 |
| Example 9 | 1.73 | 0.16 | - | 0.04 | 0.03 | 26.0 | 33.1 | 561 | 556 | 519 | 14.8 | 14.1 | 12.7 | 0.008 | 0.075 |
| Example 10 | 1.74 | 0.17 | - | 0.05 | 0.04 | 25.8 | 35.8 | 463 | 470 | 449 | 15.8 | 14.8 | 13.2 | 0.013 | 0.031 |
| Example 11 | 1.74 | 0.17 | - | 0.05 | 0.04 | 26.3 | 34.5 | 526 | 525 | 494 | 15.5 | 14.8 | 13.2 | 0.001 | 0.061 |
| Example 12 | 1.69 | - | 0.20 | 0.06 | 0.05 | 35.3 | 29.5 | 295 | 311 | 303 | 15.0 | 14.1 | 12.3 | 0.054 | 0.027 |
| Example 13 | 1.74 | 0.17 | - | 0.05 | 0.04 | 34.5 | 33.6 | 473 | 471 | 438 | 16.2 | 15.5 | 13.7 | 0.004 | 0.074 |
| Comparative example 4 | 1.39 | 0.29 | - | 0.16 | 0.15 | 42.9 | 16.8 | 83 | 24 | 13 | 20.7 | 19.1 | 14.9 | 0.711 | 0.846 |
| Comparative example 5 | 1.68 | - | - | 0.17 | 0.15 | 49.9 | 17.8 | 96 | 36 | 16 | 18.8 | 18.4 | 17.0 | 0.623 | 0.830 |

**Claims**

1. An iron-based oxide magnetic powder, comprising particles of ε-iron oxide in which Fe sites are partially substituted by another metal element, wherein when coercive forces Hc as measured at a maximum applied magnetic field of 1193 kA/m and a measurement temperature of 25°C, 60°C, and 90°C are represented by $Hc_{25}$, $Hc_{60}$, and $Hc_{90}$, respectively, the absolute values of $\Delta Hc_{60}$ and $\Delta Hc_{90}$ defined by the following formula (1) and formula (2) are both 0.15 or less:

$$\Delta Hc_{60} = (Hc_{60} - Hc_{25})/Hc_{25} \qquad (1);$$

and

$$\Delta Hc_{90} = (Hc_{90} - Hc_{25})/Hc_{25} \qquad (2).$$

2. The iron-based oxide magnetic powder according to claim 1, wherein the metal element that partially substitutes the Fe sites is Ti, Co, and one type selected from Ga and Al.

3. A production method for an iron-based oxide magnetic powder composed of particles of ε-iron oxide in which Fe sites are partially substituted by another metal element, comprising:

   a neutralization step of neutralizing an acidic aqueous solution containing a trivalent iron ion, an ion of a metal that partially substitutes the Fe sites, and a phosphorus-containing ion in which the molar ratio (P/Si) of the amount of phosphorus contained in the phosphorus-containing ion to the amount of Si of a silane compound to be added in the following coating step is 0.0001 or more and 0.01 or less with an alkali aqueous solution, thereby obtaining a slurry of a precipitate of an iron hydroxide containing a substituent metal element;
   a coating step of adding a silane compound in which the molar ratio (Si/ (Fe+M)) of the amount of Si of the silane compound to the sum (Fe+M) of the amount of the iron ion and the amount of the substituent metal ion contained in a raw material solution is 0.50 or more and 10 or less to the slurry containing the precipitate of the iron hydroxide containing the substituent metal element, thereby coating the precipitate of the iron hydroxide containing the substituent metal element with a hydrolysate of the silane compound in the presence of the phosphorus-containing ion;
   a recovery step of recovering the precipitate of the iron hydroxide containing the substituent metal element coated with the hydrolysate of the silane compound by solid-liquid separation;
   a heating step of heating the recovered precipitate of the iron hydroxide containing the substituent metal element coated with the hydrolysate of the silane compound, thereby obtaining an iron oxide powder containing the substituent metal element coated with silicon oxide; and
   a dissolution step of dissolving the silicon oxide coating by immersing the iron oxide powder containing the substituent metal element coated with silicon oxide obtained by the heating step in an alkali aqueous solution, thereby obtaining the iron oxide powder containing the substituent metal element.

4. A production method for an iron-based oxide magnetic powder composed of particles of ε-iron oxide in which Fe sites are partially substituted by another metal element, comprising:

   a neutralization step of neutralizing an acidic aqueous solution containing a trivalent iron ion and an ion of a metal that partially substitutes the Fe sites with an alkali aqueous solution, thereby obtaining a slurry of a precipitate of an iron hydroxide containing a substituent metal element;
   a coating step of adding a silane compound in which the molar ratio (Si/(Fe+M)) of the amount of Si of a silane compound to the sum (Fe+M) of the amount of the iron ion and the amount of the substituent metal ion contained in a raw material solution is 0.50 or more and 10 or less, and a phosphorus-containing ion in which the molar ratio (P/Si) of the amount of phosphorus contained in the phosphorus-containing ion to the amount of Si of the silane compound is 0.0001 or more and 0.01 or less to the slurry containing the precipitate of the iron hydroxide containing the substituent metal element, thereby coating the precipitate of the iron hydroxide containing the substituent metal element with a hydrolysate of the silane compound in the presence of the phosphorus-containing ion;
   a recovery step of recovering the precipitate of the iron hydroxide containing the substituent metal element coated with the hydrolysate of the silane compound by solid-liquid separation;

an oxidation step of heating the recovered precipitate of the iron hydroxide containing the substituent metal element coated with the hydrolysate of the silane compound, thereby obtaining an iron oxide powder containing the substituent metal element coated with silicon oxide; and

a dissolution step of dissolving the silicon oxide coating by immersing the iron oxide powder containing the substituent metal element coated with silicon oxide obtained by the oxidation step in an alkali aqueous solution, thereby obtaining the iron oxide powder containing the substituent metal element.

5. The production method for an iron-based oxide magnetic powder according to claim 3 or 4, wherein the metal element that partially substitutes the Fe sites is Ti, Co, and one type selected from Ga and Al.

6. The production method for an iron-based oxide magnetic powder according to claim 3 or 4, wherein the phosphorus-containing ion is one or more types selected from a phosphate ion, a phosphite ion, and a hypophosphite ion.

[Fig.1]

**INTERNATIONAL SEARCH REPORT**

| International application No. |
| --- |
| PCT/JP2020/004083 |

A.  CLASSIFICATION OF SUBJECT MATTER
Int.Cl.  C01G51/00(2006.01)i, C01G49/00(2006.01)i, H01F1/11(2006.01)i
FI: H01F1/11, C01G49/00A, C01G51/00B

According to International Patent Classification (IPC) or to both national classification and IPC

B.  FIELDS SEARCHED

Minimum documentation searched (classification system followed by classification symbols)
Int.Cl.  C01G51/00, C01G49/00, H01F1/11

Documentation searched other than minimum documentation to the extent that such documents are included in the fields searched
Published examined utility model applications of Japan       1922-1996
Published unexamined utility model applications of Japan       1971-2020
Registered utility model specifications of Japan       1996-2020
Published registered utility model applications of Japan       1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 2008-60293 A (THE UNIVERSITY OF TOKYO) 13.03.2008 (2008-03-13), entire text, all drawings | 1-6 |
| A | JP 2009-206376 A (THE UNIVERSITY OF TOKYO) 10.09.2009 (2009-09-10), entire text, all drawings | 1-6 |
| A | JP 2014-528920 A (HANWHA CHEMICAL CORPORATION) 30.10.2014 (2014-10-30), entire text, all drawings | 1-6 |
| A | JP 2016-169148 A (DOWA ELECTRONICS MATERIALS CO., LTD.) 23.09.2016 (2016-09-23), entire text, all drawings | 1-6 |
| A | JP 2016-174135 A (DOWA ELECTRONICS MATERIALS CO., LTD.) 29.09.2016 (2016-09-29), entire text, all drawings | 1-6 |
| A | WO 2017/018407 A1 (DOWA ELECTRONICS MATERIALS CO., LTD.) 02.02.2017 (2017-02-02), entire text, all drawings | 1-6 |

☒  Further documents are listed in the continuation of Box C.      ☒  See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17.03.2020 | 31.03.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/004083

| C (Continuation). | DOCUMENTS CONSIDERED TO BE RELEVANT | |
|---|---|---|
| Category* | Citation of document, with indication, where appropriate, of the relevant passages | Relevant to claim No. |
| A | WO 2017/209306 A1 (M TECHNIQUE CO., LTD.) 07.12.2017 (2017-12-07), entire text, all drawings | 1-6 |
| A | WO 2008/149785 A1 (THE UNIVERSITY OF TOKYO) 11.12.2008 (2008-12-11), entire text, all drawings | 1-6 |
| A | JP 2017-122044 A (DOWA ELECTRONICS MATERIALS CO., LTD.) 13.07.2017 (2017-07-13), entire text, all drawings | 1-6 |

Form PCT/ISA/210 (second sheet) (January 2015)

**INTERNATIONAL SEARCH REPORT**
Information on patent family members

| International application No. |
| --- |
| PCT/JP2020/004083 |

```
JP 2008-60293 A      13.03.2008    US 2008/0057352 A1
                                   entire text, all drawings
                                   EP 1900690 A1
                                   CN 101178965 A


JP 2009-206376 A    10.09.2009    (Family: none)


JP 2014-528920 A    30.10.2014    US 2013/0164222 A1
                                   entire text, all drawings
                                   EP 2600903 A
                                   CN 103153348 A


JP 2016-169148 A    23.09.2016    US 2018/0033528 A1
                                   entire text, all drawings


JP 2016-174135 A    29.09.2016    US 2017/0287516 A1
                                   entire text, all drawings


WO 2017/018407 A1  02.02.2017    US 2018/0208479 A1
                                   entire text, all drawings


WO 2017/209306 A1  07.12.2017    US 2017/0292028 A1
                                   entire text, all drawings
                                   EP 3360936 A
                                   CN 109072010 A


WO 2008/149785 A1  11.12.2008    US 2010/0171066 A1
                                   entire text, all drawings
                                   EP 2165975 A1
                                   CN 101687665 A


JP 2017-122044 A    13.07.2017    US 2018/0033528 A1
                                   entire text, all drawings
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008174405 A
- WO 2008029861 A
- WO 2008149785 A

**Non-patent literature cited in the description**

- **J. JIN ; S. OHKOSHI ; K. HASHIMOTO.** *Adv. Mater.,* 2004, vol. 16, 48-51
- **OHKOSHI, A. NAMAI ; K. IMOTO ; M. YOSHIKIYO ; W. TARORA ; K. NAKAGAWA ; M. KOMINE ; Y. MIYAMOTO ; T. NASU ; S. OKA ; H. TOKORO.** *Scientific Reports,* 2015, vol. 5, 14414
- **S. OHKOSHI ; S. KUROKI ; S. SAKURAI ; K. MATSUMOTO ; K. SATO ; S. SASAKI.** *Angew. Chem. Int. Ed.,* 2007, vol. 46, 8392-8395
- **A. NAMAI ; S. SAKURAI ; M. NAKAJIMA ; T. SUEMOTO ; K. MATSUMOTO ; M. GOTO ; S. SASAKI ; S. OHKOSHI.** *J. Am. Chem. Soc.,* 2009, vol. 131, 1170-1173
- **T. GOTO ; T. YOSHIDA ; T. MIYAZAKI.** *Nature,* 2012, vol. 3 (1035), 1-6
- **S. OHKOSHI ; A. NAMAI ; M. YOSHIKIYO ; K. IMOTO ; K. TAMASAKI ; K. MATSUNO ; O. INOUE ; T. IDE ; K. MASADA ; M. GOTO.** *Angew. Chem. Int. Ed.,* 2016, vol. 55, 11403-11406